Europäisches Patentamt

European Patent Office

Office européen des brevets

(19)

(11) Veröffentlichungsnummer : **0 064 762**
**B1**

(12) EUROPÄISCHE PATENTSCHRIFT

(45) Veröffentlichungstag der Patentschrift :
05.09.84

(21) Anmeldenummer : **82104072.2**

(22) Anmeldetag : **11.05.82**

(51) Int. Cl.³ : **B 29 C 17/03**

(54) **Vorrichtung zum Erwärmen von Kunststoffollen für das Vakuum-Formverfahren.**

(30) Priorität : **11.05.81 DE 3118567**

(43) Veröffentlichungstag der Anmeldung :
**17.11.82 Patentblatt 82/46**

(45) Bekanntmachung des Hinweises auf die Patenterteilung : **05.09.84 Patentblatt 84/36**

(84) Benannte Vertragsstaaten :
**AT BE CH DE FR GB IT LI NL SE**

(56) Entgegenhaltungen :
**EP-A- 0 019 659**
**DE-B- 2 630 021**

(73) Patentinhaber : **Heinrich Wagner Sinto Maschinenfabrik GmbH
Bahnhofstrasse 101
D-5928 Laasphe (DE)**

(72) Erfinder : **Grolla, Herbert
Bäderborn 2
D-5928 Laasphe (DE)**

(74) Vertreter : **Glawe, Delfs, Moll & Partner Patentanwälte
Postfach 26 01 62 Liebherrstrasse 20
D-8000 München 26 (DE)**

## Beschreibung

Die Erfindung betrifft eine Vorrichtung zum Erwärmen von Kunststoffolien für das Vakuum-Formverfahren mit einem heb- und senkbaren Rahmen, der Einrichtungen zum Halten der Folie aufweist und mit einer oberhalb des Rahmens angeordneten Wärmequelle für das Erwärmen der Kunststoffolie (EP-A1-0 019 659).

Beim Vakuum-Formverfahren sind die Gießformen mit losem Sand gefüllt, wobei die Kontur für das abzugießende Gußstück von einer Kunststoffolie gebildet wird, die durch den in der Gießform herrschenden Unterdruck gegen den losen Sand gepreßt wird. Die Herstellung einer derartigen Gießform erfolgt dadurch, daß die Kunststoffolie zuvor erwärmt und anschließend auf ein Modell aufgelegt und mittels Unterdruck an dieses angesaugt wird. Für einen einwandfreien Abguß ist es erforderlich, daß die Kunststoffolie an jeder Stelle unmittelbar an den Formwandungen des Modells anliegt. Während des Ansaugens der Folie wird diese in Abhängigkeit des Modells in unterschiedlichen Bereichen unterschiedlich gedehnt. Um die hierbei vorkommenden relativ großen Dehnungen der Folie zu ermöglichen, muß diese eine ganz bestimmte Temperatur aufweisen. Die Folie muß also auf die Temperatur erwärmt werden, bei der ein Höchstgrad der plastischen Verformbarkeit erhalten wird. Das Erwärmen der Kunststoffolie auf einen vorbestimmten Wert, und zwar in ihrer ganzen Fläche, ist mit den bisher bekannten heizeinrichtungen nicht möglich.

Bisher ist es bekannt, für das Erwärmen der an dem Rahmen gehaltenen Kunststoffolie Strahlungsheizungen zu verwenden, die oberhalb der Folie angeordnet sind. Die kalte Folie hängt aufgrund ihres Eigengewichtes ein bestimmtes Stück durch, so daß der Abstand der Folie von den Strahlungsheizungen über ihre Fläche nicht genau konstant ist. Selbst wenn man die Strahlungsheizungen dem mittleren Durchhang der Folie anpassen wollte, so könnten immer noch aufgrund unterschiedlicher Vorspannungen der Folie unterschiedlich große Abstände zu den Strahlungsheizungen auftreten. Hinzu kommt, daß die Folien bei der Erwärmung leicht plastisch verformbar werden, so daß sie insbesondere bei großen Flächen infolge ihres Eigengewichtes stark durchhängen. Spätestens dann tritt wieder der Effekt ein, daß der mittlere Teil der Fläche der Folie sehr weit von der Wärmequelle entfernt ist, während die Randzone noch in der Nähe der Wärmequelle verbleibt. Die Folge ist eine höchst unerwünschte ungleichmäßige Erwärmung der Folie.

Der Erfindung liegt die Aufgabe zugrunde, eine Vorrichtung zum Erwärmen von Kunststoffolien für das Vakuum-Formverfahren der eingangs genannten Art so auszubilden, daß die Folie über ihre gesamte Fläche gleichmäßig und in kürzester Zeit erwärmt wird.

Diese Aufgabe wird erfindungsgemäß dadurch gelöst, daß die Wärmequelle zur Erwärmung einer mit einer Heizplatte versehenen Heizeinrichtung dient, daß der Umfang der Heizplatte in etwa dem inneren lichten Querschnitt des Rahmens entspricht und eine zur Unterseite hin gerichtete Anlagefläche für die Folie aufweist, die über ihre Fläche verteilt Unterdrucköffnungen für das Ansaugen der Folie an die Heizplatte aufweist. Bei einer erfindungsgemäßen Vorrichtung für die Erwärmung von Folien für Vakuum-Formverfahren wird die Folie im Gegensatz zu den bekannten Einrichtungen nicht über Strahlungswärme, sondern durch unmittelbaren Kontakt mit der heizfläche erwärmt. Die heizfläche selber, die über die Wärmequelle auf eine konstante Temperatur gehalten wird, was regelungstechnisch keine Schwierigkeiten bietet, gibt ihre Temperatur infolge ihrer großen Masse praktisch unmittelbar an die dünne Folie ab. Hierdurch kann diese innerhalb kürzester Zeit auf eine über ihre gesamte Fläche gleichmäßige Temperatur gebracht werden. Um einen guten Wärmekontakt zwischen der Folie und der Heizplatte zu erhalten, sind in dieser über deren Fläche verteilt Unterdrucköffnungen angeordnet, so daß beim Einschalten eines Unterdruckes die Folie gegen die Heizplatte gesogen wird. Eine Folie, die mit einer erfindungsgemäßen Heizvorrichtung erwärmt wird, senkt sich somit während des Erwärmungsvorganges nicht durch, so daß die Heizeinrichtung in einem sehr kurzen Abstand oberhalb des Modells angeordnet werden kann. Hierdurch verringert sich der Weg und damit die benötigte Zeit, die für das Aufbringen der Folie auf dem Modell benötigt wird, um einen entscheidenden Betrag, so daß eine Abkühlung der Folie nur noch in einem verminderten Maße eintritt.

Gemäß einer vorteilhaften Ausführungsform der Erfindung ist oberhalb der Heizplatte mit Abstand zu dieser eine weitere Platte angeordnet und mit der Heizplatte verbunden, wobei die Abmessungen der Platte so gewählt sind, daß diese über den Rahmen für die Halterung der Folie ragt. Im Bereich dieses Überstandes weist die obere Platte an ihrer Unterseite eine umlaufende Dichtung auf, mit der diese auf dem Rahmen in der Heizstellung zu liegen kommt. Hierdurch wird ein abgeschlossener Hohlraum zwischen den beiden Platten erhalten, so daß an diesen Hohlraum der Unterdruckanschluß einer Unterdruckquelle unmittelbar angeschlossen werden kann. Dieser Hohlraum steht unmittelbar mit den Unterdrucköffnungen in der Heizplatte in Verbindung.

Gemäß einem weiteren Vorschlag der Erfindung ist an der Innenseite des Rahmens ein umlaufender federnder Schenkel angeordnet, dessen Länge so bemessen ist, daß sich dieser beim Hochfahren des Rahmens unter die Heizplatte legt, so daß ein möglicher Splat zwischen Heizplatte und Rahmen überbrückt wird.

Weitere Vorteile der Erfindung gehen aus der Beschreibung und den Ansprüchen in Verbindung mit der Zeichnung hervor.

Ein Ausführungsbeispiel der Erfindung ist im folgenden anhand der, Zeichnung näher beschrieben, in dieser zeigen :

Figur 1 einen Schnitt durch eine erfindungsgemäße Vorrichtung in der Position, in der die Folie an der Heizplatte anliegt,

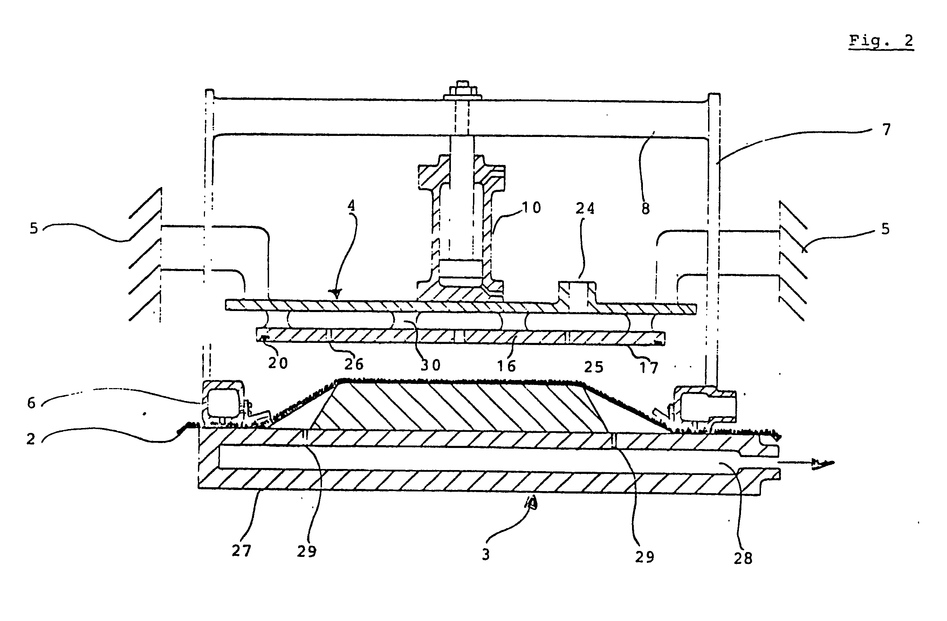

Figur 2 den gleichen Schnitt, jedoch in einer Position mit bereits abgesenkter Folie und

Figur 3 in vergrößertem Maßstab eine Einzelheit gemäß Fig. 1 und 2.

Die in den Figuren dargestellte Vorrichtung 1 zum Erwärmen und Aufbringen einer Kunststoffolie 2 auf ein Modell 3 besteht aus einer Heizeinrichtung 4, die an einem nicht weiter dargestellten Ständer 5 befestigt ist, sowie einem in der Höhe verstellbaren geschlossenen Rahmen 6. Der Rahmen 6 wird von zwei Stangen 7 getragen, die an einer Traverse 8 befestigt sind. An der Traverse 8 greift die Kolbenstange 9 eines doppelt wirkenden Hydraulikzylinders 10 an. Dieser Hydraulikzylinder ist mit seinem anderen Ende mit der Heizeinrichtung 4 verbunden. Es ist jedoch .auch denkbar, diesen Hydraulikzylinder an einem anderen ortsfesten Punkt, z. B. am Ständer 5 zu befestigen.

Der geschlossene Rahmen 6 weist einen umlaufenden Kanal 11 auf, der über eine Schlauchleitung 12 an eine nicht weiter dargestellte Unterdruckquelle anschließbar ist. An der Unterseite des Kanals 11 sind über den Umfang des Rahmens 6 verteilt Öffnungen 13 vorgesehen, über die die Kunststofffolie 2 an den Rahmen 6 angesaugt wird.

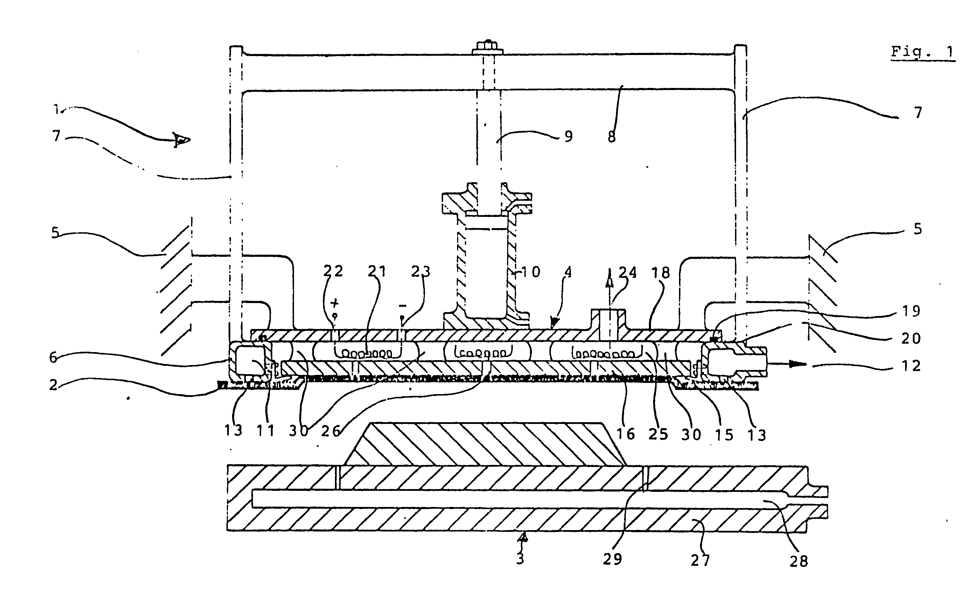

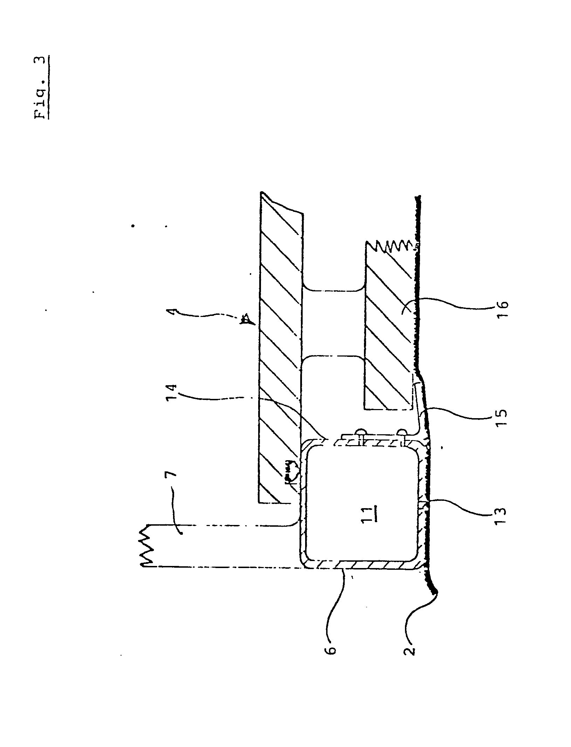

Wie am besten aus Fig. 3 zu ersehen ist, ist an der Innenseite 14 des Rahmens 6 ein Federblech 15 befestigt, das in den lichten Innenraum des Rahmens 6 ragt. Das Federblech 15 liegt in der Heizstellung, die in den Fig. 1 und 3 dargestellt ist, an einer Heizplatte 16 an, die Bestandteil der Heizeinrichtung 4 ist.

Die Heizeinrichtung 4 besteht aus der unteren Heizplatte 16, die eine Anlagefläche 17 für die Kunststofffolie bildet und einer mit Abstand zu dieser angeordneten Platte 18, die größer ist als die Platte 16 und, wie dies in Fig. 1 dargestellt ist, den Rahmen 6 allseitig übergreift. Die Platte 18 weist an ihrer dem Rahmen 6 zugewandten Fläche eine umlaufende Nut 19 auf, in der ein Dichtungsring 20 eingesetzt ist. Mit Hilfe dieser Dichtung wird der Zwischenraum zwischen den beiden Platten 16 seitlich gegenüber dem Rahmen abgedichtet. Der Abstand der beiden Platten 16 und 18 wird mit Hilfe von Distanzhülsen 30 erreicht, die zwischen den beiden Platten angeordnet sind. Im Zwischenraum zwischen den beiden Platten 16 und 18 sind des weiteren die Wärmequellen 21 angeordnet, die an eine nicht weiter dargestellte Spannungsquelle angeschlossen sind und über die die Temperatur der Platte 16 konstant gehalten wird. Die Zuleitungen 22, 23 zu den als elektrische heizwiderstände ausgebildeten Wärmequellen sind druckdicht durch die Platte 18 geführt. In der Platte 18 ist ein Unterdruckanschluß 24 angeordnet, mit dem der Raum 25 zwischen den beiden Platten 16 und 18 und dem Rahmen 6 evakuiert werden kann. In der Heizplatte 16 sind über die Fläche verteilt eine Vielzahl von Unterdrucköffnungen 26 angeordnet, über die Luft zwischen der Folie 2 und der Heizplatte 16 evakuiert wird, so daß sich die Folie 2 unmittelbar an die Heizplatte 16 anlegt.

Das Modell 3 ist in üblicher Weise ausgebildet. Das Modell weist eine Modellplatte 27 auf, die mit einem Unterdruckkanal 28 versehen ist, der über eine nicht weiter dargestellte Schlauchleitung an eine Unterdruckquelle anschließbar ist. Zur Oberseite hin sind Bohrungen 29 in der Modellplatte angebracht, so daß die Luft evakuiert werden kann, die sich im abgesenkten Zustand des Rahmens 6 zwischen der Folie 2 und dem Modell 3 befindet.

Die Arbeitsweise der Vorrichtung ist folgende :

Auf den sich in der in Fig. 1 gezeigten Position befindlichen Rahmen 6 wird maschinell oder von Hand eine Kunststoffolie aufgespannt, so daß diese nur eine unmerkliche Durchhängung nach unten aufweist. Zur Befestigung der Folie 2 an dem Rahmen 6 dienen die über den Umfang des Rahmens angeordneten Unterdrucköffnungen 13, mittels derer die Folie an den Rahmen angesaugt wird. Im Anschluß hieran wird die Folie durch Evakuierung des zwischen den Platten 16 und 18 und dem Rahmen ausgebildeten Raumes 25 und damit auch über die Unterdrucköffnungen 26 an die Heizplatte 16 angesaugt, wie dies in Fig. 1 dargestellt ist. Diese Heizplatte wird durch Wärmequellen, in diesem Fall durch elektrische Heizelemente, auf einer genau definierten Temperatur gehalten, so daß die durch den äußeren Luftdruck gegen die Heizplatte 16 gepreßte Folie sich unmittelbar auf die Heizplatte 16 gepreßte Folie sich unmittelbar auf die Temperatur der Heizplatte erwärmt. Der Abstand der Heizplatte 16 zur Oberfläche des Modells 3 kann sehr gering gehalten werden, da sich die Folie während des Erwärmens nicht durchsenkt.

Um ein mögliches Ankleben der Folie an der Heizplatte 16 von vorn herein auszuschließen, kann die Oberfläche der Heizplatte 16 mit einer Teflonschicht versehen sein, die sehr dünn gehalten werden kann, so daß sich das Aufwärmen der Folie hiedurch kaum verzögert.

Nach dem Aufwärmen wird der Unterdruck in dem Raum 25 der Heizeinrichtung abgebaut und durch Beaufschlagung des Hydraulikzylinders 10 der Rahmen 6 soweit abgesenkt, bis dieser auf der Oberfläche der Modellplatte zur Auflage kommt : Die zwischen der Folie 2 und dem Modell befindliche Luft wird über Bohrungen 29 abgesaugt, so daß sich die erwärmte Folie den Konturen des Modells in allen Bereichen anschmiegen kann. Im Anschluß hieran wird der Unterdruck im Rahmen 6 aufgehoben und dieser anschließend in seine in Fig. 1 gezeigte Stellung zurückverfahren. Ein neuer Arbeitszyklus kann dann beginnen.

**Ansprüche**

1. Vorrichtung zum Erwärmen von Kunststoffolien für das Vakuum-Formverfahren mit einem heb- und senkbaren Rahmen (6), der Einrichtungen (13) zum Halten der Folie aufweist und mit einer oberhalb des Rahmens angeordneten Wärmequelle (21) für das Erwärmen der Kunststoffolie, dadurch gekennzeichnet, daß die Wärmequelle (21) zur Erwärmung einer mit einer Heizplatte (16) versehenen Heizeinrichtung (4) dient, daß der Umfang der Heizplatte (16) in etwa dem inneren lichten Querschnitt des Rahmens (6) entspricht und eine zur Unterseite hin gerichtete Anlagefläche (17) für die Kunststoffolie (2) aufweist und daß die Heizplatte (16) über ihre Fläche verteilt Unterdrucköffnungen (26) für das Ansaugen der Kunststoffolie (2) an die Heizplatte (16) aufweist.

2. Vorrichtung nach Anspruch 1, dadurch gekennzeichnet, daß oberhalb der Heizplatte (16) mit Abstand zu dieser eine weitere Platte (18) angeordnet und mit der Heizplatte verbunden ist, daß die Abmessungen der Platte (18) so gewählt sind, daß diese den Rahmen (6) überdeckt und daß in der Unterseite der Platte (18) dem Rahmen gegenüberliegend ein umlaufender Dichtungsring (20) eingesetzt ist.

3. Vorrichtung nach Anspruch 1 oder 2, dadurch gekennzeichnet, daß an der Innenseite des Rahmens (6) ein zum Innenraum weisendes Federblech (15) angeordnet ist, das zu einem gewissen Teil unter die Heizplatte (16) greift.

4. Vorrichtung nach einem der Ansprüche 1 bis 3, dadurch gekennzeichnet, daß der zwischen der Heizplatte (16), der Platte (18) und dem Rahmen (6) ausgebildete Raum (25) an eine Unterdruckquelle angeschlossen ist.

5. Vorrichtung nach einem der Ansprüche 1 bis 4, dadurch gekennzeichnet, daß auf Anlagefläche (17) der Heizplatte (4) eine Teflonschicht aufgebracht ist.

**Claims**

1. An apparatus for heating plastics sheeting for a vacuum forming process, with a frame (6) which can be raised and lowered and which has means (13) for holding the sheet, and with a heat source (21) arranged above the frame for heating the plastics sheet, characterised in that the heat source (21) serves to heat a heating means (4) provided with a heating plate (16), that the periphery of the heating plate (16) corresponds approximately to the inner unobstructed cross-section of the frame (6) and has a contact surface (17) for the plastics sheet (2) directed towards the underside, and that the heating plate (16) has spaced apart over its surface low-pressure openings (26) for the suction of the plastics sheet (2) on to the heating plate (16).

2. An apparatus according to claim 1, characterised in that above the heating plate (16) and at a distance therefrom there is arranged a further plate (18) connected with the heating plate, that the dimensions of the plate (18) are so chosen that it overlaps the frame (6) and that a peripheral sealing ring (20) is fitted in the underside of the plate (18) opposite the frame.

3. An apparatus according to claim 1 or 2, characterised in that a spring plate (15) facing towards the interior is disposed on the inside of the frame (6) and engages to a certain extent under the heating plate (16).

4. An apparatus according to any of claims 1 to 3, characterised in that the space (25) formed between the heating plate (16), the plate (18) and the frame (6) is connected to an low-pressure source.

5. Apparatus according to any of claims 1 to 4, characterised in that a polytetrafluoroethylene coating is applied on to the contact surface (17) of the heating plate (4).

**Revendications**

1. Dispositif pour le réchauffement de feuilles en matière plastique en vue du moulage par le vide, comprenant un cadre (6) qui peut monter et descendre et qui comporte des dispositifs (13) pour maintenir la feuille, ainsi qu'une source de chaleur (21) disposée au-dessus du cadre pour réchauffer la feuille de matière plastique, caractérisé en ce que la source de chaleur (21) sert au réchauffement d'un dispositif de chauffage (4) muni d'une plaque chauffante (16), en ce que le périmètre de la plaque chauffante (16) correspond à peu près à la section libre intérieure du cadre (6), cette plaque chauffante comportant, du côté inférieur, une face d'application (17) pour la feuille de matière plastique (2), et en ce que la plaque chauffante (16) présente des ouvertures de dépression (26) qui sont réparties sur toute sa surface pour l'application de la feuille de matière plastique (2) contre la plaque chauffante (16) par aspiration.

2. Dispositif selon la revendication 1, caractérisé en ce qu'une autre plaque (18) est disposée au-dessus de la plaque chauffante (16), à distance de celle-ci, et est solidaire de la plaque chauffante, en ce que les dimensions de cette plaque (18) sont choisies de telle manière que cette dernière déborde sur le cadre (6), et en ce qu'une garniture d'étanchéité (20) est insérée tout autour de la face inférieure de la plaque (18) vis-à-vis du cadre.

3. Dispositif selon la revendication 1 ou 2, caractérisé en ce qu'il est disposé, sur la face intérieure du cadre (6), une lame de ressort (15) qui fait saillie dans l'espace intérieur de ce dernier et qui s'applique pour une certaine partie sur le dessous de la plaque chauffante (16).

4. Dispositif selon l'une quelconque des revendications 1 à 3, caractérisé en ce que la chambre (25) formée entre la plaque chauffante (16), la plaque (18) et le cadre (6) est raccordée à une source de dépression.

5. Dispositif selon l'une quelconque des revendications 1 à 4, caractérisé en ce que la face d'application (17) de la plaque chauffante (4) est recouverte d'une couche de Teflon.

Fig. 1

0 064 762

Fig. 2

0 064 762

Fig. 3

3